# EUROPÄISCHE PATENTSCHRIFT

(11) **EP 3 025 478 B1**
(45) Veröffentlichungstag und Bekanntmachung des Hinweises auf die Patenterteilung: **27.02.2019**
(21) Anmeldenummer: 14780838.0
(22) Anmeldetag: 02.10.2014
(51) Int. Cl.: H04L 29/06, H04L 29/08

(54) **VORRICHTUNG UND VERFAHREN ZUR ÜBERTRAGUNG VON DATEN**
APPARATUS AND METHOD FOR TRANSMITTING DATA
DISPOSITIF ET PROCÉDÉ DE TRANSMISSION DE DONNÉES

(30) Priorität: 17.12.2013 DE 102013226171
(43) Veröffentlichungstag der Anmeldung: 01.06.2016
(73) Patentinhaber: Siemens Aktiengesellschaft, 80333 München (DE)
(72) Erfinder: FALK, Rainer, 85586 Poing (DE); FRIES, Steffen, 85598 Baldham (DE)
(86) Internationale Anmeldenummer: PCT/EP2014/071128
(87) Internationale Veröffentlichungsnummer: WO 2015/090659

(56) Entgegenhaltungen:
- DE-B3-102006 036 111
- US-A1- 2005 262 559
- US-B1- 6 757 830

## Beschreibung

Die Erfindung bezieht sich auf eine Vorrichtung und ein Verfahren zur Übertragung von Daten von einem Sender in einem ersten Kommunikationsnetz zu einem Empfänger in einem zweiten sicherheitskritischen Kommunikationsnetz.

In industriellen Automatisierungssystemen, wie zum Beispiel einem Stellwerk oder einer Zugsteuerung in der Bahnautomatisierung, in beispielsweise Produktionshallen der Fertigungsautomatisierung, oder beispielsweise in Raffinerien oder Brauereien in der Prozessautomatisierung, werden bezüglich Sicherheit kritische Automatisierungsbereiche mit allgemeinen Netzen, beispielsweise einem Büronetz, gekoppelt. An Netzwerkgrenzen zwischen einem ersten Kommunikationsnetz und einem zweiten sicherheitskritischen Kommunikationsnetz werden üblicherweise Sicherheits-Netzübergangseinheiten, beispielsweise Firewalls, installiert, um eine kontrollierte Kopplung unterschiedlich kritischer Netzwerkbereiche zu realisieren. In solchen Sicherheits-Gateways wird der zu übertragende Datenstrom gemäß konfigurierbaren Filterregeln gefiltert und gegenüber Prüfmustern, wie beispielsweise Virenpattern, überprüft.

Aus der Druckschrift US 2005/0262559 A1 ist ein Verfahren zur Computersicherheit bekannt, das eine eingehende Email in eine Quarantäne-Warteschlange stellt und die Email auf unerwünschten Code überprüft. Wird kein unerwünschter Code festgestellt, wird die Quarantänelaufzeit überprüft. Ist die Quarantänelaufzeit noch nicht abgelaufen, wird die Email in die Quarantäne-Warteschleife zurückgestellt und zu einem späteren Zeitpunkt erneut gegenüber unerwünschtem Code überprüft.

Aus der Druckschrift US 6 757 830 B1 ist bekannt, empfangenen Emails eine minimale Verzögerungszeit zuzuweisen, die abhängig von Eigenschaften der empfangenen Email bestimmt wird.

Nach Ablauf der minimalen Verzögerungszeit wird die Email mit den aktuellsten Anti-Virus und Anti-Spamming Tests überprüft, und erst dann freigegeben.

Aus der Druckschrift DE 10 2006 036 111 B3 ist beispielsweise ein Verfahren und Prüfsystem zur sicheren Übertragung einer Nachricht von einer ersten Zone in eine zweite Zone bekannt. Dabei wird die Nachricht von der ersten Zone zu einer Auswerteeinheit einer dritten Zone mittels einer Einweg-Schleuseneinheit, beispielsweise einer Datendiode, übertragen. Kopien der Nachricht werden dabei verschiedenen Analyseeinheiten zur Verfügung gestellt, die diese prüfen und abhängig vom Auswerteergebnis aller Analyseeinheiten die Nachricht dann gegebenenfalls in eine zweite Zone weiterleiten. Eine solche Analyseeinheit ist beispielsweise ein Virenscanner, der die Nachrichten beziehungsweise den Datenstrom auf bis dahin bekannte Prüfmuster, in diesem Fall Virenpattern, überprüft.
Um einen zuverlässigen Schutz vor Schadsoftware wie Viren zu erreichen, müssen die Prüfmuster fortlaufend aktualisiert werden. Üblich ist dabei eine Aktualisierung der Prüfmuster im Stunden- oder längsten falls im Tagesrhythmus. Ein Einspielen solcher stunden- bzw. tagesaktueller Prüfmuster oder Virenpattern ist in Industrialisierungsumgebungen nicht praktikabel. Es werden daher statt Virenscannern in der Praxis "White List"-Scanner verwendet. In einer White List werden die Muster oder die Daten spezifiziert, die in ein zweites sicherheitskritisches Kommunikationsnetz durchgelassen werden. Solche White List-Scanner können jedoch nur intern, innerhalb einer statischen Umgebung, verwendet werden. Sie sind nicht geeignet, um variable Daten sicher mit externen Systemen auszutauschen, da solche Daten nicht in der festen White List eingetragen sind.
Es ist somit die Aufgabe der vorliegenden Erfindung, einen sicheren Austausch von Daten beim Übergang von einem allgemeinen ersten Kommunikationsnetz in ein sicherheitskritisches zweites Kommunikationsnetz bereitzustellen und dabei insbesondere Speicherkapazität in einer zum Austausch der Daten verwendeten Sicherheitsübertragungsvorrichtung einzusparen.

Das erfindungsgemäße Verfahren gemäß dem Anspruch 1 zur Übertragung von Daten von einem Sender in einem ersten Kommunikationsnetz zu einem Empfänger in einem zweiten sicherheitskritischen Kommunikationsnetz über eine Sicherheitsüberqanqsvorrichtunq, werden in einem ersten Verfahrensschritt die zu übertragenden Daten durch den Sender bereitgestellt. In weiteren Verfahrensschritten wird ein Eingangszeitpunkt der zu übertragenden Daten erfasst und eine Verweildauer in Abhängigkeit von Informationen zu den zu übertragenden Daten ermittelt. Ein Kontrollwert der zu übertragenden Daten wird in einem Verweilspeicher gespeichert. Im nächsten Verfahrensschritt werden die zu übertragenden Daten nach Ablauf der Verweildauer mit einem nach Ablauf der Verweildauer aktuellen Prüfmuster geprüft und die Daten für den Empfänger bereitgestellt, wenn die Daten bei der Überprüfung als unbedenklich erachtet wurden.
Der Sender voranmeldet die zu übertragenden Daten, indem die zu übertragenden Daten lediglich zur Erfassung des Eingangszeitpunkts und zur Ermittlung der Verweildauer temporär vom Sender für die Sicherheitsüberqanqsvorrichtunq bereitgestellt werden und der Sender nach Ablauf der Verweildauer die zu übertragenden Daten zur Übertragung erneut für die Sicherheitsüberqanqsvorrichtunq bereitstellt. Dies reduziert gleichfalls die notwendige Speicherkapazität in einem Verweilspeicher.

Durch das erneute Bereitstellen der zu übertragenden Daten nach Ablauf der Verweilzeit wird sichergestellt, dass die Daten mit einem Prüfmuster geprüft werden, das auch Schadsoftware erkennt, die zur Zeit der temporären Bereitstellung der Daten noch nicht erkennbar waren. Somit kann insbesondere beim Update von Prüfungsmustern in größeren Abständen sichergestellt werden, dass keine veralteten Prüfmuster für sensible Daten verwendet werden. Dies reduziert gleichfalls die notwendige Speicherkapazität in einem Verweilspeicher.

In einer vorteilhaften Ausführungsform wird vor der Überprüfung der Daten die Authentizität der zu übertragenden Daten durch eine erneute Ermittlung eines aktuellen Kontrollwerts der zu übertragenden Daten und einem Vergleich des aktuellen Kontrollwerts mit dem gespeicherten Kontrollwert sichergestellt.

Dies hat den Vorteil, dass weniger Speicherkapazität zum Abspeichern der zu übertragenden Daten selbst vorgehalten werden muss. Erst vor der Überprüfung der zu übertragenden Daten müssen diese erneut bereitgestellt werden.

In einer Ausführungsform wird die Verweildauer in Abhängigkeit vom Eingangszeitpunkt und/oder von vorgebbaren Konfigurationsparametern bestimmt.

Dies hat den Vorteil, dass die Verweildauer optimiert auf die Randbedingungen für die zu übertragenen Daten gewählt werden kann. So wird beispielsweise die Verweildauer bei einem Eingangszeitpunkt kurz nach einem Update der Prüfmuster und einer längeren Zeitspanne bis zum nächsten Update, die Verweildauer länger gewählt werden, als bei einem kurz nach dem Eingangszeitpunkt anberaumten Prüfmusterupdate.

In einer vorteilhaften Ausführungsform wird die Verweildauer statisch vorkonfiguriert oder die Verweildauer aus einem vorgebbaren Wertebereich zufällig bestimmt werden.

Dies hat den Vorteil, dass zur Bestimmung der Verweildauer ein einfaches Schema angewendet wird und eine einfach strukturierte Komponente diese Aufgabe erledigen kann.

In einem Ausführungsbeispiel wird die Verweildauer abhängig vom Dateityp der zu übertragenden Daten bestimmt.

Dabei wird beispielsweise für ausführbare Dateitypen, bspw. Programmcode, eine längere Verweildauer anberaumt, als für eine bspw. unkritische Textdatei.

In einem weiteren Ausführungsbeispiel wird die Verweildauer abhängig von einem Vertrauenswert des Senders und/oder von einer Sicherheitsstufe des Empfängers bestimmt. Ein Vertrauenswert des Senders kann spezifisch für den Sender sein, und/oder er kann spezifisch für die Senderdomäne des Senders und/oder für den Typ des Senders sein. Eine Senderdomäne eines Senders ist z.B. durch ein Teilnetzwerk bestimmt, dem der Sender zugeordnet ist. Die Senderdomäne kann z.B. abhängig von der IP-Adresse oder dem DNS-Namen des Senders bestimmt werden. Der Typ eines Senders kann z.B. durch den Hersteller, das Modell oder die Version des Senders bestimmt sein. Ebenso kann die Sicherheitsstufe des Empfängers spezifisch für den Empfänger oder spezifisch für die Empfängerdomäne des Empfängers oder spezifisch wir den Typ des Empfängers sein.

Beispielsweise kann zu übertragende Daten, die von einem firmenfremden Server im Internet bereitgestellt werden, ein niedriger Vertrauenswert zugeordnet sein, wohingegen zu übertragende Daten, die von einem Server einer Entwicklungsabteilung im firmeneigenen Intranet bereitgestellt werden, ein höherer Vertrauenswert zugeordnet wird. Zu übertragenden Daten mit einem hohen Vertrauenswert des Senders, kann beispielsweise kürzere Verweildauer zugeordnet werden. In gleicher Weise kann unterschieden werden, ob der Empfänger eine systemkritische Funktion hat oder nicht direkt in kritische Prozesse eingreift.
In einer Ausführungsform werden die zu übertragenden Daten mit einem zum Zeitpunkt der Durchführung der Prüfung aktuellen Prüfmuster geprüft.
Dies hat den Vorteil, dass immer das aktuellste Prüfmuster verwendet wird, insbesondere wenn die Prüfung selbst erst eine geraume Zeit nach Ablauf der Verweildauer stattfindet.
In einer Ausführungsform werden die als unbedenklich überprüften Daten in einer Liste von zur Übertragung in das zweite Kommunikationsnetz freigegebenen Daten eingetragen.
Dies ermöglicht eine zeitlich flexible Übertragung der Daten, beispielsweise für einen festen Zeitpunkt anberaumte Updates einer ganzen oder von Teilen einer Automationsanlagen.

Die erfindungsgemäße Vorrichtung gemäß dem Anspruch 9 zur Übertragung von Daten von einem Sender in einem ersten Kommunikationsnetz zu einem Empfänger in einem zweiten sicherheitskritischen Kommunikationsnetz umfasst eine Eingangspuffereinheit, eine Ausgangspuffereinheit, eine Warteeinheit und eine Prüfeinheit. Die Eingangspuffereinheit ist derart ausgebildet, die zu übertragenden Daten der Warteeinheit bereitzustellen. Die Warteeinheit ist derart ausgebildet, einen Eingangszeitpunkt der bereitgestellten zu übertragenden Daten zu erfassen und eine Verweildauer in Abhängigkeit von Informationen zu den bereitgestellten zu übertragenden Daten zu ermitteln und, anstatt die gesamten zu übertragenden Daten, lediglich einen Kontrollwert der bereitgestellten zu übertragenen Daten zu speichern. Die Prüfeinheit ist derart ausgebildet, die zu übertragenden Daten nach Ablauf der Verweildauer mit einem nach Ablauf der Verweildauer aktuellen Prüfmuster zu prüfen. Die Ausgangspuffereinheit ist derart ausgebildet, die Daten für den Empfänger bereitzustellen, wenn die Daten bei der Überprüfung als unbedenklich erachtet wurden. Dabei werden die zu übertragenden Daten lediglich zur Erfassung des Eingangszeitpunkts und zur Ermittlung der Verweildauer und des Kontrollwerts temporär an die Warteeinheit bereitgestellt und nach Ablauf der Verweildauer werden die zu übertragenden Daten vom Sender selbst zur Übertragung erneut bereitgestellt.
Eine solche Vorrichtung ermöglicht es, in einem System, in dem beispielsweise lediglich in längeren Zeitabständen aktualisierte Prüfmuster eingespielt werden können, Daten mit hoher Sicherheit gegen aktuelle Prüfmuster prüfen zu können und somit ein Einschleusen von Schadsoftware in ein sicherheitskritisches Kommunikationsnetz zu verhindern. Dies reduziert gleichfalls die notwendige Speicherkapazität in einem Verweilspeicher.

Ein erfindungsgemäßes Computerprogrammprodukt gemäß dem Anspruch 10 mit Programmbefehlen zur Durchführung des Verfahrens sowie ein Datenträger gemäß dem Anspruch 11, der das Computerprogrammprodukt speichert, ermöglichen es, ein solches Verfahren auf unterschiedlichsten prozessorgesteuerten Vorrichtungen einzulesen beziehungsweise auszuführen.
Ausführungsbeispiele der erfindungsgemäßen Vorrichtung und des erfindungsgemäßen Verfahrens sind in den Zeichnungen beispielhaft dargestellt und werden anhand der nachfolgenden Beschreibung näher erläutert. Es zeigen:
- Fig. 1: ein Ausführungsbeispiel des erfindungsgemäßen Verfahrens als Ablaufdiagramm;
- Fig. 2: eine Kommunikationsumgebung mit einem Ausführungsbeispiel einer erfindungsgemäßen Vorrichtung in schematischer Darstellung; und
- Fig. 3: ein Ausführungsbeispiel einer erfindungsgemäßen Übertragungsvorrichtung in schematischer Darstellung.

Einander entsprechende Teile sind in allen Figuren mit den gleichen Bezugszeichen versehen.

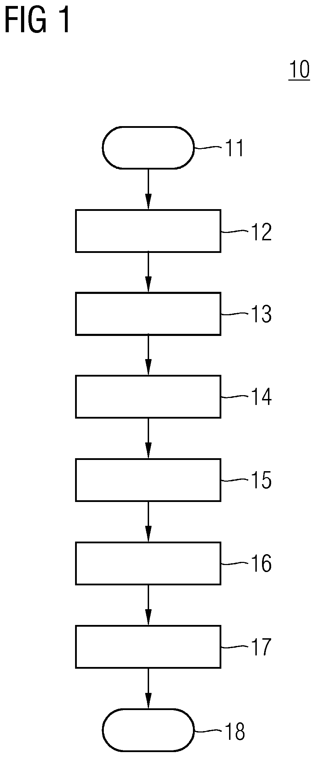

Figur 1 zeigt die einzelnen Verfahrensschritte einer Datenübertragung von einem Sender in einem ersten Kommunikationsnetz, beispielsweise einem Büronetz, an einen Empfänger in einem sicherheitskritischen zweiten Kommunikationsnetz, beispielsweise einem Bahnautomatisierungsnetz, einem Fahrzeugsteuerungsnetz oder einem Prozessautomatisierungsnetzwerk.

Ausgehend von einem Startzustand 11 werden in einem ersten Verfahrensschritt 12 die zu übertragenden Daten von einem Sender bereitgestellt. Anschließend, im Verfahrensschritt 13, wird der Eingangszeitpunkt der zu übertragenden Daten erfasst und im Verfahrensschritt 14 eine Verweildauer in Abhängigkeit von Informationen zu den zu übertragenden Daten ermittelt. Anschließend werden im Verfahrensschritt 15 die zu übertragenden Daten und/oder ein Kontrollwert der zu übertragenden Daten in einem Verweilspeicher gespeichert. Der Verfahrensschritt 15 kann alternativ auch vor dem Erfassen des Eingangszeitpunktes, siehe Verfahrensschritt 13 stattfinden, sodass als Eingangszeitpunkt der Zeitpunkt der Speicherung der zu übertragenden Daten beziehungsweise des Kontrollwerts erfasst wird.

Beim Speichern der Daten wird der Dateiinhalt selbst gespeichert. Alternativ oder zusätzlich dazu kann aus den zu übertragenden Daten ein Kontrollwert ermittelt und in dem Verweilspeicher gespeichert werden. Der Kontrollwert kann beispielsweise ein Hash-Wert sein, der mit einer Hash-Funktion, wie beispielsweise dem SHA-256 Algorithmen, ermittelt wird. Der Kontrollwert wird entweder aus der bereitgestellten Datei mit den zu übertragenden Daten in einer entsprechenden Übergangsvorrichtung erstellt oder aber direkt vom Sender übermittelt.

Wird ein Kontrollwert abgespeichert, so wird vor der tatsächlichen Überprüfung der Daten die Authentizität der zu übertragenden Daten durch eine erneute Ermittlung eines aktuellen Kontrollwerts der zu übertragenden Daten und einem Vergleich des mit dem gespeicherten Kontrollwert sichergestellt. Zur Ermittlung des aktuellen Kontrollwerts wird die gleiche Funktion wie zur Ermittlung des gespeicherten Kontrollwert verwendet. Nur wenn der aktuelle Kontrollwert und der gespeicherte Kontrollwert übereinstimmen, findet eine Überprüfung mit einem nach Ablauf der Verweildauer aktuellen Prüfmuster statt. Stimmen die beiden Kontrollwerte nicht überein, kann beispielsweise eine Fehlernachricht ausgegeben werden und das Verfahren abgebrochen werden.

Die Verweildauer der zu übertragenden Daten im Verweilspeicher beziehungsweise die Verweildauer bis zum frühestmöglichen Prüfzeitpunkt wird beispielsweise abhängig von dem registrierten Eingangszeitpunkt bestimmt. Die Verweildauer kann beispielsweise abhängig von dem Zeitpunkt des letzten Prüfmusterupdates zum Eingangszeitpunkt gewählt werden. Für die Verweildauer kann aber auch ein zufälliger Wert ermittelt werden, der beispielsweise größer als ein vorbestimmter Schwellwert oder Mindestwert ist und/oder in einem vorgebbaren Wertebereich liegt.

Die Verweildauer kann beispielsweise auch abhängig vom Dateityp der zu übertragenden Daten ermittelt werden. Diesem Kriterium liegt die Tatsache zugrunde, dass unterschiedliche Datenformate unterschiedlich kritisch auf den Empfänger wirken. Beispielsweise sind Daten eines Programmcodes, die beispielsweise Parameter eines Steuerungsgerätes ändern, weitaus kritischer zu erachten, als eine Textdatei, die lediglich eine neue Meldung auf einen Kontrollmonitor zeigt.

Die Verweildauer kann aber auch oder zusätzlich in Abhängigkeit von einem Vertrauenswert des Senders für das Senden von Schadsoftware abhängig sein. Dazu muss vorher jedem Sender ein solcher Vertrauenswert zugeordnet worden sein. Ein Vertrauenswert des Senders kann spezifisch für den Sender sein und/oder er kann spezifisch für die Senderdomäne des Senders und/oder den Typ des Senders sein.

Alternativ oder auch zusätzlich kann die Verweildauer in Abhängigkeit von einer Sicherheitsstufe des Empfängers bestimmt werden. Zusätzlich können besonders zeitkritische zu übertragende Daten, die entsprechend markiert sind oder diese Eigenschaft als Metadaten mitliefern, eine kürzere Verweildauer gewährt werden. Die Verweildauer kann ebenso abhängig von einem der Datei zugeordneten "benötigt bis"-Zeitpunkt bestimmt werden. Dabei kann die Verweildauer optional verlängert werden, wenn die Datei erst später benötigt wird. Die Verweildauer kann beispielsweise im Stundenbereich liegen, aber auch Tage oder länger betragen.

Nach Ablauf der Verweildauer werden dann die zu übertragenden Daten mit dem nach Ablauf der Verweildauer aktuellen Prüfmuster überprüft, siehe Verfahrensschritt 16. Werden zu übertragende Daten nicht direkt nach Ablauf der Verweildauer, sondern erst später, vom Empfänger abgerufen, so kann beispielsweise erst zum Zeitpunkt des Abrufens die Überprüfung mit dem zum Abrufzeitpunkt aktuellen Prüfmuster geprüft werden. Somit wird ein Detektieren auch von neuesten Schadmustern oder Schadsoftware erreicht. Es muss jedoch immer sichergestellt sein, dass die zu übertragende Daten mit einem Prüfmuster überprüft werden, das mindestens direkt nach Ablauf der Verweildauer aktuell ist.

Anschließend wird die Datei an den Empfänger im sicherheitskritischen Kommunikationsnetz weitergeleitet, wenn zum Prüfzeitpunkt die Daten als unbedenklich geprüft wurden, siehe Verfahrensschritt 17. Die Prüfung kann beispielsweise durch einen Virenscanner erfolgen. Dabei kann optional der Zeitpunkt der Durchführung der Prüfung und ein Referenzdatum der verwendeten Prüfmuster als Metadaten den geprüften Daten mitgegeben werden.

Alternativ zum Weiterleiten der Daten kann auch eine Eintragung der Daten beziehungsweise eine Referenz der Daten in eine Liste von zur Übertragung freigegebenen Daten eingetragen werden. Eine solche Liste wird beispielsweise auch als "White List" bezeichnet. Als Referenz für die Daten kann beispielsweise ein Dateiname, ein Downloadpfad oder auch der Kontrollwert der Daten verwendet werden.

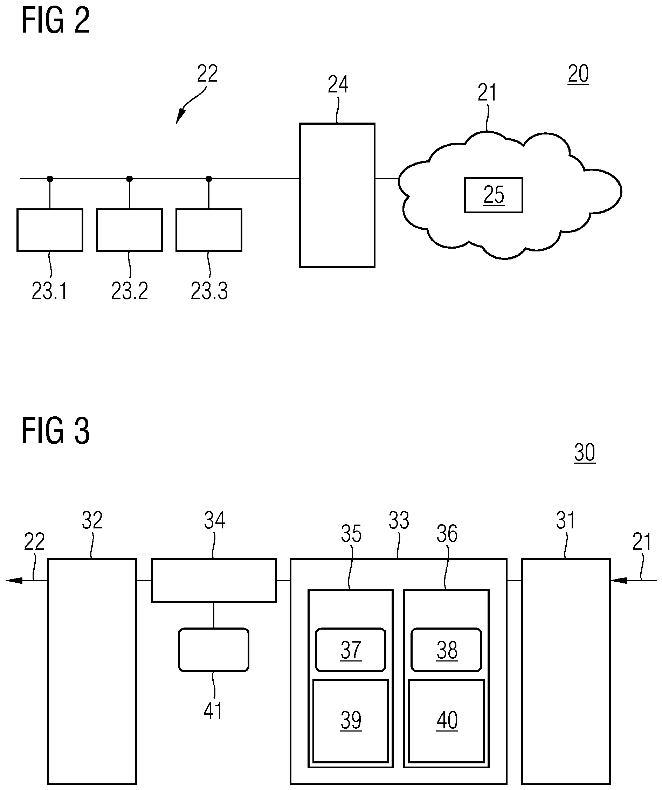

Figur 2 zeigt eine Kommunikationsumgebung 20 mit einem ersten Kommunikationsnetz 21 und einem zweiten sicherheitskritischen Kommunikationsnetz 22. Daten, die vom ersten Kommunikationsnetz 21 in das zweite sicherheitskritische Kommunikationsnetz 22 übertragen werden sollen, werden am Netzübergang von einer Sicherheits-Übergangsvorrichtung 24 überprüft. Eine solche Sicherheits-Übergangsvorrichtung 24 kann beispielsweise eine Firewall sein. Bei dem zweiten sicherheitskritischen Netz kann es sich um ein Bahnautomationsnetzwerk, ein Fahrzeugsteuerungsnetzwerk, ein Energieautomatisierungsnetzwerk, ein Fertigungsautomatisierungsnetzwerk, etc. handeln. Empfänger 23.1, 23.2, 23.3 können beispielsweise Steuergeräte oder auch ein Überwachungsterminal in einem solchen sicherheitskritischen Kommunikationsnetz 22 sein. Ein Sender 25 im ersten Kommunikationsnetz 21 kann beispielsweise eine Rechnervorrichtung oder ein Server in einem Büronetz sein. Die Sicherheitsübergangsvorrichtung 24 kann beispielsweise das erfindungsgemäße Verfahren realisieren.

Figur 3 zeigt eine Übergangsvorrichtung 30 mit einer Ausführungsform einer erfindungsgemäßen Vorrichtung zum Übertragen von Daten von einem Sender 25 in einem ersten Kommunikationsnetz 21 zu einem Empfänger 23.1, 23.2, 23.3 in einem zweiten sicherheitskritischen Kommunikationsnetz 22. Die Vorrichtung 30 umfasst einen Eingangspuffer 31, der mit einer Warteeinheit 33 verbunden ist. Die Warteeinheit 33 ist wiederum mit einer Prüfeinheit 34 verbunden, die Zugriff auf kontinuierlich aktualisierte Prüfmuster 41 hat. Die Prüfeinheit 34 ist wiederum mit einem Ausgangspuffer 32 verbunden, aus dem die geprüften Daten von einem Empfänger 23.1, 23.2, 23.3 im sicherheitskritischen Kommunikationsnetz 22 beispielsweise abgerufen werden können.

Der Eingangspuffer 31 sowie der Ausgangspuffer 32 können als Speichereinheiten ausgebildet sein, die die zu übertragenden Daten beziehungsweise die geprüften Daten temporär entweder zur Übergabe in die Warteeinheit 33 oder in das zweite Kommunikationsnetz 22 dienen.

Die Warteeinheit 33 selbst ist derart ausgebildet die vom Eingangspuffer 31 bereitgestellten Daten 37, 38 in einen Wartebereich 35, 36 abzuspeichern und dabei einen Eingangszeitpunkt der zu übertragenden Daten zu erfassen. Daneben werden die zu übertragenden Daten auf weitere Konfigurationsparameter überprüft. Anhand dieser Informationen bzw. Konfigurationsdaten und/oder zusammen mit dem Eingangszeitpunkt wird nun eine Verweildauer ermittelt. Während der ermittelten Verweildauer bleiben die zu übertragenden Daten 37, 38 in einem Wartebereich 35, 36 gespeichert. Der Eingangszeitpunkt, die Verweildauer und optional weitere Informationen werden als Metadaten 39, 40 ebenfalls in der Warteeinheit 33, insbesondere in den entsprechenden Wartebereichen 35, 36 der zugehörigen zu übertragenden Daten gespeichert.

Anstatt die gesamten zu übertragenden Daten in einem Wartebereich 35, 36 abzuspeichern, kann auch ein Kontrollwert über die zu übertragenden Daten, beispielsweise mittels einer Hash-Funktion, gebildet werden. Lediglich dieser Kontrollwert wird dann zusammen mit dem Eingangszeitpunkt, der Verweildauer, etc. in einem Bereich 39, 40 gespeichert. Nach Ablauf der Verweildauer werden die beispielsweise im ersten Wartebereich 35 abgespeicherten zu übertragenden Daten 39 an die Prüfeinheit 34 weitergegeben und dort mit einem aktuellen Prüfmuster 41 überprüft. Das verwendete Prüfmuster 41 muss dabei mindestens zu einem Zeitpunkt direkt nach Ende der Verweildauer aktuell sein. Wird die Überprüfung erst eine Zeitspanne nach Ende der Verweildauer durchgeführt, so kann das Prüfmuster 41 auch ein zu diesem späteren Zeitpunkt aktuelles Prüfmuster sein. Die Prüfeinheit 34 kann aber auch mehrere Schadsoftware-Scanner, beispielsweise von unterschiedlichen Herstellern, umfassen, um so die Detektionswahrscheinlichkeit einer Schadsoftware zu erhöhen.

Falls die Prüfung keinen Schadbefall der Daten ergibt, werden die überprüften Daten über den Ausgangspuffer 32 für den Empfänger, beispielsweise zur Abholung, bereitgestellt.

Wurde von der Warteeinheit 33 ein Kontrollwert beim Eingang der zu übertragenden Daten ermittelt und beispielsweise in einem Bereich 40 eines zweiten Wartebereichs 36 zusammen mit den zu übertragenden Daten, die im Bereich 38 abgespeichert wurden, gespeichert, wird vor der Zuführung der Daten zur Prüfeinheit 34 die Authentizität der zu übertragenden Daten kontrolliert. Dazu wird von den zu übertragenden Daten ein aktueller Kontrollwert mit dem gleichen Algorithmus beziehungsweise mit der gleichen Funktion ermittelt und mit dem im Bereich 38 gespeicherten Kontrollwert verglichen. Stimmen beide Kontrollwerte überein, werden die zu überprüfenden Daten an die Prüfeinheit 34 weitergegeben. Ist dies nicht der Fall wird beispielsweise eine Fehlermeldung ausgegeben.

Zu übertragende Daten können aber auch vorangemeldet werden. Dabei werden bei einer Voranmeldung die Daten an die Warteeinheit 33 temporär übertragen und dort der Kontrollwert ermittelt und gespeichert. Der Eingangszeitpunkt sowie die Verweildauer werden ermittelt und beispielsweise dem Sender mitgeteilt. Die zu übertragenden Daten selbst bleiben entweder bis zum Ablauf der Verweildauer in dem Eingangspuffer 31 oder werden vom Sender 25 selbst erneut bereitgestellt. Die Prüfung der Authentizität der zu übertragenden Daten sowie auch die Überprüfung selbst erfolgt nach Ablauf der Wartezeit in gleicher Weise wie vorher beschrieben.

Statt die geprüften Daten in einem Ausgangspuffer 32 zur Abholung durch den Empfänger bereitzustellen, kann die Datei beziehungsweise eine Referenz der Datei, beispielsweise der Dateiname, ein Downloadpfad oder der Kontrollwert in einer White List eingetragen werden und zum Download freigegeben werden.

Neben der Anwendung des erfindungsgemäßen Verfahrens, beispielsweise in einer Übergangsvorrichtung 30, kann ein solches Verfahren auch in einem externen Netz, beispielsweise als Cloud Service, realisiert werden. Ein Nutzer, der in diesem Fall als Sender 21 agiert, kann zu übertragende Daten in einen Warte-Cloud Service hochladen. Dort wird er für die Verweildauer, die auch als Quarantänedauer angesehen werden kann, gespeichert und danach abhängig von einem dann aktuellen Prüfmuster geprüft werden. Wenn die Datei als unbedenklich erachtet wird, wird die Datei zum Download bereitgestellt. Erst dann kann zum Beispiel die im Warte-Cloud Service hinterlegte Datei von einem System in einem sicherheitskritischen zweiten Kommunikationsnetzwerk geladen werden.

In einem weiteren Anwendungsszenario erfolgt die Bearbeitung der übertragenen Daten nach der Quarantäne beziehungsweise Verweildauer in der Cloud, zum Beispiel bei einer Big Data Analyse von Betriebsdaten. Hier wird ein Wartebereich in einem Cloud Service eingerichtet, in dem die hochgeladenen Daten zwischengespeichert werden. Nach Ablauf der Quarantäne bzw. Verweildauer werden sie auf maliziöse Inhalte überprüft, bevor sie einem Big Data Analyse-Cloud Dienst bereitgestellt werden.

Die zu übertragenden Daten können in einem beliebigen Dateiformat, beispielsweise eine Textdatei, eine Programmdatei, eine Updatedatei, auch Patch bezeichnet, eine Konfigurationsdatei, eine Videodatei, eine Audiodatei oder eine XML-Datei sein.

Durch das beschriebene Verfahren beziehungsweise die beschriebene Vorrichtung ergibt sich zwar eine größere Verzögerung bei der Übertragung der Daten. Dadurch kann jedoch erreicht werden, dass auch Schadsoftware, die erst bspw. einige Tage später durch eine Prüfeinheit erkannt und berücksichtigt werden. Dies führt zu einer erhöhten Zuverlässigkeit und reduziert die Verwundbarkeit gegen sogenannte "Zero-Day-Exploits", so dass keine Daten mit an sich bekannten Schadfunktionen in ein sicherheitskritisches Kommunikationsnetz übertragen werden.

Alle beschriebenen und/oder gezeichneten Merkmale können im Rahmen der Erfindung vorteilhaft miteinander kombiniert werden. Die Erfindung ist nicht auf die beschriebenen Ausführungsbeispiele beschränkt.

## Patentansprüche

1. Verfahren zur Übertragung von Daten von einem Sender (25) in einem ersten Kommunikationsnetz (21) zu einem Empfänger (23.1, 23.2, 23.3) in einem zweiten sicherheitskritischen Kommunikationsnetz (22) über eine Sicherheitsüberqanqsvorrichtunq (24, 30) mit den Verfahrensschritten:
- Bereitstellen (12) der zu übertragenden Daten durch den Sender (25) für die Sicherheitsüberqanqsvorrichtunq (24, 30),
- Erfassen (13), durch die Sicherheitsüberqanqsvorrichtunq (24, 30), eines Eingangszeitpunktes der zu übertragenden Daten,
- Ermitteln (14), durch die Sicherheitsüberqanqsvorrichtunq (24, 30), einer Verweildauer in Abhängigkeit von Informationen zu den zu übertragenden Daten, wobei die zu übertragenden Daten lediglich zur Erfassung des Eingangszeitpunkts und zur Ermittlung der Verweildauer temporär vom Sender (25) für die Sicherheitsüberqanqsvorrichtunq (24, 30) bereitgestellt werden,
- Speichern, durch die Sicherheitsüberqanqsvorrichtunq (24, 30), anstatt der gesamten zu übertragenden Daten, lediglich eines Kontrollwerts der zu übertragenden Daten in einem Verweilspeicher,
- nach Ablauf der Verweildauer erneutes Bereitstellen der zu übertragenden Daten durch den Sender (25) für die Sicherheitsüberqanqsvorrichtunq (24, 30),
- Überprüfen (16), durch die Sicherheitsüberqanqsvorrichtunq (24, 30), der erneut bereitgestellten zu übertragenden Daten nach Ablauf der Verweildauer mit einem nach Ablauf der Verweildauer aktuellen Prüfmuster, und
- Bereitstellen (17), durch die Sicherheitsüberqanqsvorrichtunq (24, 30), der Daten für den Empfänger, wenn die Daten bei der Überprüfung als unbedenklich erachtet wurden .

2. Verfahren nach Anspruch 1, wobei vor der Überprüfung der Daten die Authentizität der zu übertragenden Daten durch eine erneute Ermittlung eines aktuellen Kontrollwerts der zu übertragenden Daten und einem Vergleich des aktuellen Kontrollwerts mit dem gespeicherten Kontrollwert sichergestellt wird.

3. Verfahren nach Anspruch 1 oder 2, wobei die Verweildauer in Abhängigkeit vom Eingangszeitpunkt bestimmt wird.

4. Verfahren nach einem der Ansprüche 1 bis 3, wobei die Verweildauer statisch vorkonfiguriert oder die Verweildauer aus einem vorgebbaren Wertebereich zufällig bestimmt wird.

5. Verfahren nach einem der Ansprüche 1 bis 4, wobei die Verweildauer abhängig vom Dateityp der zu übertragenden Daten bestimmt wird.

6. Verfahren nach einem der Ansprüche 1 bis 5, wobei die Verweildauer abhängig von einem Vertrauenswert des Senders (25) und/oder von einer Sicherheitsstufe des Empfängers (23.1, 23.2, 23.3) bestimmt wird.

7. Verfahren nach einem der Ansprüche 1 bis 6, wobei die zu übertragenden Daten mit einem zum Zeitpunkt der Durchführung der Prüfung aktuellen Prüfmuster überprüft werden.

8. Verfahren nach einem der Ansprüche 1 bis 7, wobei die als unbedenklich überprüften Daten in einer Liste von zur Übertragung in das zweite Kommunikationsnetz freigegebenen Daten eingetragen werden.

9. Vorrichtung zur Übertragung von Daten von einem Sender (25) in einem ersten Kommunikationsnetz (21) zu einem Empfänger (23.1, 23.2, 23.3) in einem zweiten sicherheitskritischen Kommunikationsnetz (22) umfassend eine Eingangs-Puffereinheit (31), eine Ausgangs-Puffereinheit (32), eine Warteeinheit (33) und eine Prüfeinheit (34), wobei
- die Eingangs-Puffereinheit (31) derart ausgebildet ist die zu übertragenden Daten der Warteeinheit (33) bereitzustellen,
- die Warteeinheit (33) derart ausgebildet ist einen Eingangszeitpunkt der bereitgestellten zu übertragenden Daten zu erfassen und eine Verweildauer in Abhängigkeit von Informationen zu den bereitgestellten zu übertragenden Daten zu ermitteln und, anstatt die gesamten zu übertragenden Daten, lediglich einen Kontrollwert der bereitgestellten zu übertragenden Daten zu speichern,
- die Prüfeinheit (34) derart ausgebildet ist die zu übertragenden Daten nach Ablauf der Verweildauer mit einem nach Ablauf der Verweildauer aktuellen Prüfmuster (41) zu überprüfen, und
- die Ausgangs-Puffereinheit (32) derart ausgebildet ist die Daten für den Empfänger (23.1, 23.2, 23.3) bereitzustellen, wenn die Daten bei der Überprüfung als unbedenklich erachtet wurden,
**dadurch gekennzeichnet, dass**
die Eingangs-Puffereinheit (31) derart ausgebildet ist, die zu übertragenden Daten lediglich zur Erfassung des Eingangszeitpunkts und zur Ermittlung der Verweildauer und des Kontrollwerts temporär an die Warteeinheit (33) bereitzustellen und die Eingangs-Puffereinheit derart ausgebildet ist, nach Ablauf der Verweildauer die zu übertragenden Daten vom Sender (25) selbst zur Übertragung erneut zu empfangen.

10. Computerprogrammprodukt mit Programmbefehlen zur Durchführung des Verfahrens gemäß den Ansprüchen 1-8.

11. Datenträger, der das Computerprogrammprodukt nach Anspruch 10 speichert.

## Claims

1. Method for transmitting data from a transmitter (25) in a first communication network (21) to a receiver (23.1, 23.2, 23.3) in a second, safety-critical communication network (22) via a security gateway apparatus (24, 30), having the following method steps:
- the transmitter (25) for the security gateway apparatus (24, 30) provides (12) the data to be transmitted,
- a time of receipt of the data to be transmitted is recorded (13) by the security gateway apparatus (24, 30),
- a dwell time is determined (14) by the security gateway apparatus (24, 30) on the basis of information relating to the data to be transmitted, wherein the transmitter (25) for the security gateway apparatus (24, 30) temporarily provides the data to be transmitted only for the purpose of recording the time of receipt and determining the dwell time,
- the security gateway apparatus (24, 30) stores, instead of the total data to be transmitted, merely a check value for the data to be transmitted in a dwell memory,
- the transmitter (25) for the security gateway apparatus (24, 30) again provides the data to be transmitted after expiry of the dwell time,
- after expiry of the dwell time, the data to be transmitted which have been provided again are checked (16) by the security gateway apparatus (24, 30) using a test pattern which is up-to-date after expiry of the dwell time, and
- the data for the receiver are provided (17) by the security gateway apparatus (24, 30) if the data were considered to be harmless during the check.

2. Method according to Claim 1, wherein, before checking the data, the authenticity of the data to be transmitted is ensured by redetermining an up-to-date check value for the data to be transmitted and comparing the up-to-date check value with the stored check value.

3. Method according to Claim 1 or 2, wherein the dwell time is determined on the basis of the time of receipt.

4. Method according to one of Claims 1 to 3, wherein the dwell time is statically preconfigured or the dwell time is randomly determined from a predefinable range of values.

5. Method according to one of Claims 1 to 4, wherein the dwell time is determined on the basis of the file type of the data to be transmitted.

6. Method according to one of Claims 1 to 5, wherein the dwell time is determined on the basis of a confidence value of the transmitter (25) and/or on the basis of a security level of the receiver (23.1, 23.2, 23.3).

7. Method according to one of Claims 1 to 6, wherein the data to be transmitted are checked using a test pattern which is up-to-date at the time of carrying out the test.

8. Method according to one of Claims 1 to 7, wherein the data checked as being harmless are entered in a list of data released for transmission to the second communication network.

9. Apparatus for transmitting data from a transmitter (25) in a first communication network (21) to a receiver (23.1, 23.2, 23.3) in a second, safety-critical communication network (22), comprising an input buffer unit (31), an output buffer unit (32), a waiting unit (33) and a testing unit (34), wherein
- the input buffer unit (31) is designed to provide the waiting unit (33) with the data to be transmitted,
- the waiting unit (33) is designed to record a time of receipt of the data to be transmitted which have been provided and to determine a dwell time on the basis of information relating to the data to be transmitted which have been provided and to store, instead of the total data to be transmitted, merely a check value for the data to be transmitted which have been provided,
- the testing unit (34) is designed to check the data to be transmitted after expiry of the dwell time using a test pattern (41) which is up-to-date after expiry of the dwell time, and
- the output buffer unit (32) is designed to provide the data for the receiver (23.1, 23.2, 23.3) if the data were considered to be harmless during the check,
**characterized in that**
the input buffer unit (31) is designed to temporarily provide the waiting unit (33) with the data to be transmitted only for the purpose of recording the time of receipt and determining the dwell time and the check value, and the input buffer unit is designed to again receive the data to be transmitted from the transmitter (25) itself after expiry of the dwell time.

10. Computer program product having program instructions for carrying out the method according to Claims 1-8.

11. Data storage medium which stores the computer program product according to Claim 10.

## Revendications

1. Procédé de transmission de données depuis un émetteur (25) se trouvant dans un premier réseau de communication (21) à un récepteur (23.1, 23.2, 23.3) se trouvant dans un second réseau de communication (22) critique en termes de sécurité, par l'intermédiaire d'un dispositif d'interface de sécurité (24, 30), comprenant les étapes suivantes :
- fourniture (12) des données à transmettre par l'émetteur (25) au dispositif d'interface de sécurité (24, 30),
- détection (13) par le dispositif d'interface de sécurité (24, 30) d'un moment d'entrée des données à transmettre,
- détermination (14), par le dispositif d'interface de sécurité (24, 30) d'un temps de séjour en fonction des informations sur les données à transmettre, les données à transmettre étant fournies temporairement par l'émetteur (25) au dispositif d'interface de sécurité (24, 30) uniquement pour détecter le moment de réception et pour déterminer le temps de séjour,
- enregistrement, par le dispositif d'interface de sécurité (24, 30), à la place de toutes les données à transmettre, uniquement d'une valeur de contrôle des données à transmettre dans une mémoire de résidence,
- après expiration du temps de séjour, nouvelle fourniture des données à transmettre par l'émetteur (25) au dispositif d'interface de sécurité (24, 30),
- contrôle (16), par le dispositif d'interface de sécurité (24, 30) des données à transmettre à nouveau fournies après l'expiration du temps de séjour avec un type de contrôle actuel à la fin du temps de séjour, et
- fourniture (17), par le dispositif d'interface de sécurité (24, 30) des données au récepteur lorsque les données ont été considérées comme inoffensives lors du contrôle.

2. Procédé selon la revendication 1, selon lequel, avant le contrôle des données, l'authenticité des données à transmettre est assurée par une nouvelle détermination d'une valeur de contrôle instantanée des données à transmettre et par une comparaison de la valeur de contrôle instantanée avec la valeur de contrôle enregistrée.

3. Procédé selon la revendication 1 ou 2, selon lequel le temps de séjour est déterminé en fonction de l'instant d'entrée.

4. Procédé selon l'une des revendications 1 à 3, selon lequel le temps de séjour est pré-configuré de façon statique ou est déterminé aléatoirement dans une plage de valeurs prédéfinie.

5. Procédé selon l'une des revendications 1 à 4, selon lequel le temps de séjour est déterminé en fonction du type de fichier des données à transmettre.

6. Procédé selon l'une des revendications 1 à 5, selon lequel le temps de séjour est déterminé en fonction d'un niveau de confiance de l'émetteur (25) et/ou d'un degré de sécurité du récepteur (23.1, 23.2, 23.3).

7. Procédé selon l'une des revendications 1 à 6, selon lequel les données à transmettre sont contrôlées par un type de contrôle actuel au moment de la réalisation du contrôle.

8. Procédé selon l'une des revendications 1 à 7, selon lequel les données contrôlées comme étant inoffensives sont enregistrées dans une liste de données autorisées à transmettre dans le second réseau de communication.

9. Dispositif de transmission de données par un émetteur (25) dans un premier réseau de communication (21) à un récepteur (23.1, 23.2, 23.3) dans un second réseau de communication (22) critique en termes de sécurité, comprenant une unité tampon d'entrée (31), une unité tampon de sortie (32), une unité d'attente (33) et une unité de contrôle (34), dans lequel
- l'unité tampon d'entrée (31) est conçue de façon à fournir les données à transmettre (33) à l'unité d'attente,
- l'unité d'attente (33) est conçue de manière à détecter l'instant d'entrée des données à transmettre fournies et à déterminer un temps de séjour en fonction des informations sur les données à transmettre fournies, et, au lieu de toutes les données à transmettre, à enregistrer uniquement une valeur de contrôle des données fournies à transmettre,
- l'unité de contrôle (34) est conçue de manière à contrôler les données à transmettre à la fin du temps de séjour avec un type de contrôle (41) actuel à la fin du temps de séjour, et
- l'unité tampon de sortie (32) est conçue de manière à fournir les données au récepteur (23.1, 23.2, 23.3) lorsque les données ont été considérées comme inoffensives lors du contrôle,
**caractérisé en ce que** l'unité tampon d'entrée (31) est conçue de manière à fournir temporairement à l'unité d'attente (33) les données à transmettre uniquement pour une détection de l'instant d'entrée et pour une détermination du temps de séjour et de la valeur de contrôle, et l'unité tampon d'entrée est conçue de manière à recevoir à nouveau, à la fin du temps de séjour, les données à transmettre de l'émetteur (25) en vue de leur transmission elle-même.

10. Produit de programme informatique comportant des instructions de programme destinées à exécuter le procédé selon l'une des revendications 1 à 8.

11. Support de données qui enregistre le produit de programme informatique selon la revendication 10.
